# EUROPEAN PATENT SPECIFICATION

(11) **EP 4 035 753 B1**
(45) Date of publication and mention of the grant of the patent: **23.10.2024**
(21) Application number: 22154828.2
(22) Date of filing: 02.02.2022
(51) Int. Cl.: B01D 29/35, B01D 35/06, B01D 35/16, B03C 1/02, B03C 1/033, C02F 1/00, C02F 1/48

(54) **MAGNETIC FILTER FOR PROCESSING A FLUID**
MAGNETFILTER ZUR VERARBEITUNG EINES FLUIDS
FILTRE MAGNÉTIQUE POUR LE TRAITEMENT D'UN FLUIDE

(30) Priority: 02.02.2021 IT 202100002198
(43) Date of publication of application: 03.08.2022
(73) Proprietor: R.B.M. S.p.A., 25060 Polaveno (BS) (IT)
(72) Inventor: BOSSINI, Guido, 25075 NAVE (IT)
(74) Representative: Studio Torta S.p.A.

(56) References cited:
- WO-A1-2007/031984
- IT-A1- 201800 020 302
- JP-U- H0 685 015
- US-A- 3 727 761
- US-A- 4 067 810

## Description

### TECHNICAL FIELD

The invention relates to a magnetic filter for processing a fluid.

The invention has advantageous, though non-exclusive application in the processing of a fluid circulating in a thermal system, in particular in a heating and/or cooling system, to which explicit reference will be made in the description below without because of this losing in generality.

### PRIOR ART

When dealing with thermal systems, operators need to intercept impurities forming because of corrosion and scaling during the normal operation of the systems; these impurities can cause wear and damaging of components of the system and, therefore, have to be removed.

To this aim, sludge remover filters are used, which have a substantially cylindrical body delimiting an inner chamber and provided with a fluid inlet port and with a fluid outlet port. The body houses a filtering cartridge, for example made of metal mesh, which holds back impurities through direct filtration. A problem arising from these filters lies in the fact that small-sized particles, in particular metal particles, can go through the metal mesh and keep circulating in the system.

Furthermore, magnetic filters are known, in which the fluid, besides undergoing a direct filtration through a filtering material, is caused to flow in contact with a magnet designed to hold back ferrous impurities. An example of these known filters is disclosed in WO2020128954 A1, which shows a magnetic filter comprising two bodies connected to one another in a sealed manner and defining an inner chamber housing a cylindrical filtering cartridge with a metal mesh.

The cartridge divides the chamber into an inner volume housing a magnetic element coaxial to the cartridge and an annular outer volume surrounding the cartridge. The upper body comprises an inlet port and an outlet port, which can be connected to the system, and houses a rotary shut-off element, which can rotate between a closing position, in which the ports are closed, and an opening position, in which the inlet port communicates with the inner volume and the outlet port communicates with the outer volume of the chamber. Therefore, the inflow brushes the magnetic element, which holds back ferromagnetic particles, flows through the filtering cartridge, which holds back impurities, and flows towards the outlet fitting.

However, even in this case, there is a chance that small-sized particles can fail to be attracted by the magnet and go through the cartridge.

IT 2018 0002 0302 A1 discloses a filter having the features of the preamble of claim 1.

### SUBJECT-MATTER OF THE INVENTION

A scope of the present invention is to provide existing filters with an accessory magnetic filter element.

In order to do so, the invention provides a filter according to claim 1.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
figure 1 is a perspective view of a sludge remover filter according to the invention;
figure 2 is a middle section of the filter of figure 1;
figure 3 is a perspective view of a magnetic accessory of the filter of figure 1;
figure 4 is an exploded perspective view of the component of figure 3;
figure 5 is an exploded perspective view of a detail of figure 4; and
figure 6 is a schematic section showing the polarization of magnets of the filter.

### PREFERRED EMBODIMENT OF THE INVENTION

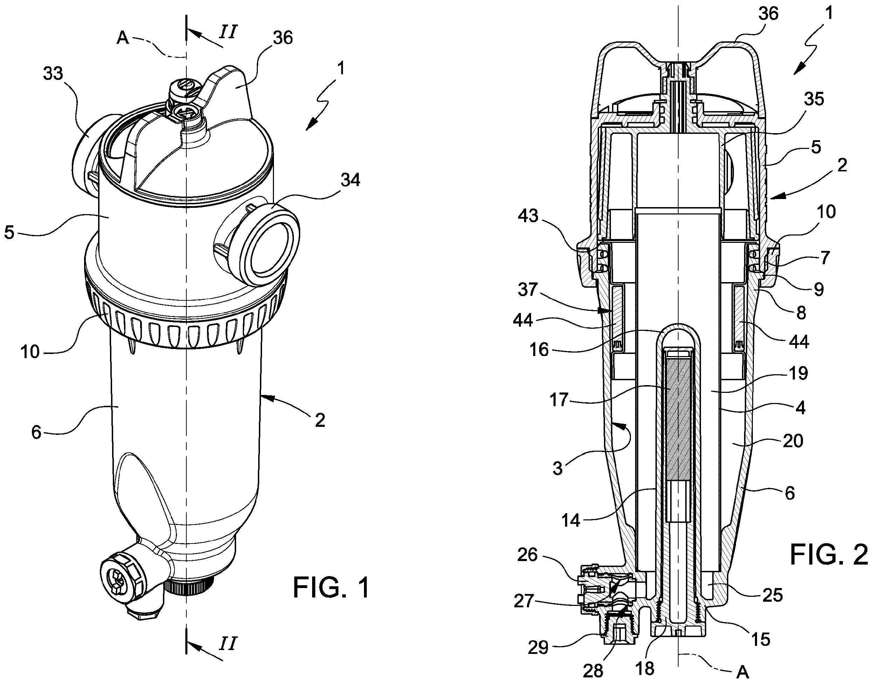

With reference to figures 1 and 2, number 1 indicates, as a whole, a magnetic sludge remover filter for a thermal system comprising a substantially cylindrical housing 2 with axis A defining internally a filtration chamber 3, and a filter cartridge 4 housed in the chamber 3.

The housing 2 consists of an upper body 5 and a lower body 6, which are substantially cup-shaped and are telescopically coupled to one another, in a sealed manner, at the respective open ends 7, 8. The end 8 of the lower body 6 has an annular flange 9, which is axially locked against the end 7 of the upper body 5 by a ring nut 10 screwed onto the end 7.

The lower body 6 integrally defines a hollow axial appendage 14 with axis A, which axially projects from a lower end 15 of the lower body 6 into the chamber 3. The appendage 14 is open at the bottom and closed at an upper end 16 thereof.

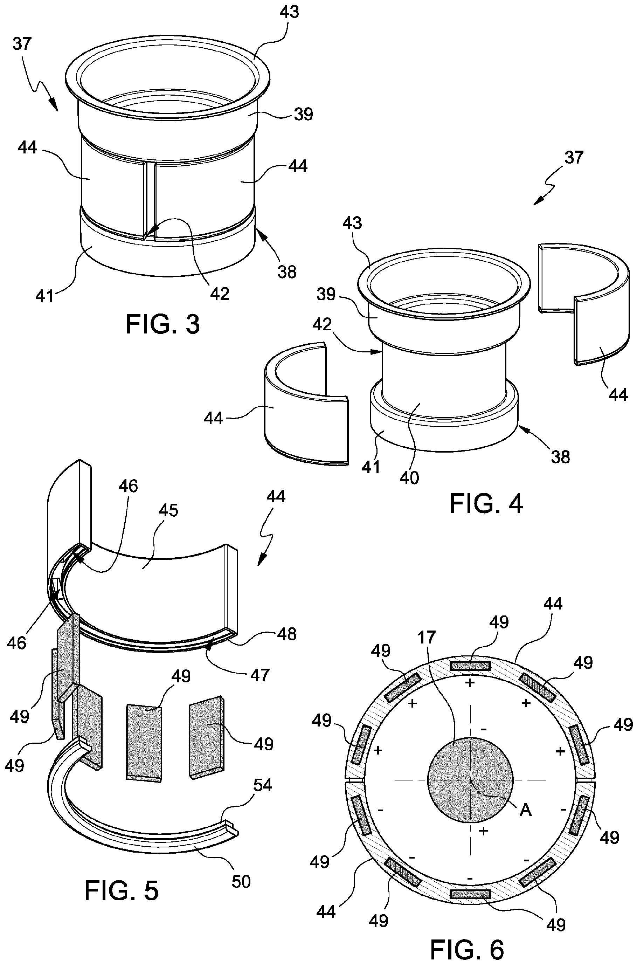

Inside the appendage 14 there is a magnet 17, which is housed inside a screw 18, which is removably screwed into the appendage. The magnet 17 is polarized with its poles arranged on opposite sides of a vertical diametral plane (figure 6).

The cartridge 4, with a cylindrical shape with axis A, is conveniently made of metal mesh and divides the chamber 3 into an inner volume 19 and an outer volume 20coaxial to one another.

The inner volume 19 opens downwards into an annular chamber 25 provided at the lower end 15 of the lower body 6 around the appendage 14.

The filter 1 is further provided with a discharge valve 26 housed in a discharge duct 27 radially extending from the lower end 15 of the lower body 6 and communicating with the annular chamber 25.

A purge opening 28, which is normally closed by a cap 29, extends downwards from the discharge duct 27.

The discharge valve 26, operable by means of a wrench not shown herein, can rotate between a closing position and an opening position, in which the purge opening 28 is connected with the annular chamber 25.

The upper body 5 (figure 1) is provided with an inlet port 33 and an outlet port 34 coaxial to and diametrically opposite one another. The upper body 5 (figure 2) houses a rotary shut-off valve 35, which is manually controlled by means of an upper knob 36. The shut-off valve 35, which is disclosed in the aforesaid international patent application WO2020128954 A1 and is not described in detail herein for it is not part of the invention, is movable between a first closing position, in which the ports 33, 34 are closed, and a second opening position, in which the inlet port 33 communicates with the inner volume 19 and the outlet port 34 communicates with the outer volume 20 of the chamber 3.

According to the invention, the filter 1 comprises a magnetic accessory 37, which is mounted inside the body 2 coaxially thereto and is shown in figures 3 to 5.

The magnetic accessory 37 comprises a support 38 consisting of a tubular sleeve provided with a first axial end portion 39, a central portion 40 and a second axial end portion 41. The central portion 40 has a smaller diameter than the end portions 39, 41 so as to define an annular recess 42. The first end portion 39 has an outer circumferential end flange 43.

The magnetic accessory 37 further comprises a pair of substantially half-cylindrical inserts 44 housed in the annular recess 42 so as to substantially form, as a whole, a cylindrical crown, whose outer surface is flush with the outer surface of the end portions 39, 41.

Each insert 44 (figure 5) comprises a body 45, which is conveniently made of a plastic material and is provided with a plurality of axial pockets 46 angularly equally spaced apart from one another, which axially lead to a curved recess 47 obtained in a base surface 48 of the insert. The insert 44 further comprises a plurality of magnets 49 having the shape of plates extending in an axial direction, which are housed in the respective pockets 46 having a corresponding shape. The insert 44 finally comprises a curved cap 50, which has a front projection 54 designed to engage the recess 47 in the base surface 48 of the body 45. The body 50 is fixed on the base surface 48, for example by means of ultrasound welding.

The magnets 49 are conveniently magnetized so that the respective poles are on the main faces thereof. In one of the inserts 44, the positive pole of the magnets 49 is on the face facing outward in radial direction, whereas, in the other insert 44, the positive pole is on the inward facing face, so that the insert 44 with the positive poles of the magnets 49 on the inside faces the negative pole of the magnet 17 and the insert 44 with the negative poles of the magnets 49 on the inside faces the positive pole of the magnet 17 (figure 6).

The magnetic inserts 44 are firmly held in the annular recess 42 thanks to a mutual magnetic attraction, thus forming, with the support 38, a monolithic structure that can easily be handled even in an automated manner.

The magnetic accessory 37 is housed in the body 2 of the filter 1 with the flange 43 in axial contact with the upper end 8 of the lower body 6 and axially interposed between said end and the shut-off valve 35.

The operation of the filter 1, which already is partly evident from the description above, is the following.

With the shut-off valve 35 in a closed position, the filter 1 is isolated from the system.

With the shut-off valve 35 in an open position, the inlet port 33 communicates with the inner volume 19 and the outlet port 34 communicates with the outer volume 20.

Therefore, the inflowing fluid flows from the inlet port 33 to the inner volume 19 and from the latter to the outer volume 20 through the filter cartridge 4. Therefore, impurities are held back in the inner volume; ferromagnetic impurities are attracted by the magnet 17 and settle on the outer surface of the appendage 14, whereas other impurities tend to precipitate in the annular chamber 25 due to gravity.

The flow exiting volume 20 at the outlet port 34 flows by the magnetic accessory 37, which is arranged immediately below the shut-off valve 35. Possible ferromagnetic impurities that are so small-sized to pass through the meshes of the cartridge 4 can be intercepted before the fluid flows out of the filter 1 and back to the system.

The filter 1 is self-cleaning. For the removal of sludge building up on the bottom, it is sufficient to remove the cap 29 and temporarily open the discharge valve 28, so as to decompress the system. Then, the discharge valve 28 is closed again and the shut-off valve 35 is closed as well by rotating the knob 36. The screw 18 can now be unscrewed, thus removing the magnet 17, which causes ferromagnetic impurities to precipitate to the bottom of the filter.

The purging operation is completed by opening the discharge valve 26 again; by so doing, the fluid present in the chamber 3 flows out of the purge opening 28, dragging the impurities accumulated on the bottom of the lower body 6.

In order to clean the magnetic accessory 37, the lower body 6 has to be removed by unscrewing the ring nut 10. The magnetic inserts 44 can easily be separated from the support 38 for cleaning purposes.

An analysis of the features of the filter 1 clearly reveals the advantages of the invention. In particular, the use of the magnetic accessory 37 leads to a second magnetic filtration step carried out downstream of the direct filtration step, thus ensuring that even small-sized ferromagnetic particles, which for example derive from the corrosion of the pipes of the system, cannot go back to the system, hence eliminating all risks of damages or wear of the components of the system.

Finally, the filter 1 described herein by way of example can be subjected to changes and variants, which do not go beyond the scope of protection defined by the appended claims.

For example, the filter 1 can lack a primary magnetic filtration carried out by means of the magnet 17, in which case the magnetic filtration is exclusively carried out by the magnetic accessory 37.

The magnetic accessory 37 can further be used as "retrofit" in existing filters, provided with primary magnetic filtration or lacking it.

## Claims

1. A filter for processing a fluid, comprising:
- a housing (2) including a first and second body (5, 6) coupled together in a sealed manner and provided with an inlet port (33) and an outlet port (34) and delimiting a filtration chamber (3);
- a tubular filter element (4) housed in the filtration chamber (3) and defining an internal volume (19) connectable to one of the ports (33) and an external volume (20) connectable to another of the ports (34); and
- at least one tubular magnetic accessory (37) housed in the outer volume (20) coaxially to the filter element (4),
**characterized in that** the magnetic accessory (37) includes a tubular support (38) distinct from and removably supported by the housing (2) and a plurality of magnetic inserts (44) carried by the tubular support (38), the inserts (44) extending circumferentially around the tubular support (38) and comprising a body (45) made of a plastic material, a plurality of magnets (49) housed in respective pockets (46) of the body (45) and a cap (50) mounted on the body (45) to retain the magnets (49) in the pockets (46).

2. Filter as claimed in claim 1, wherein the magnetic accessory (37) comprises a peripheral flange (43) couplable to the housing (2).

3. Filter as claimed in claim 1 or 2, wherein the inserts (44) are housed in a circumferential seat (42) of the support (38).

4. Filter as claimed in claim 3, wherein the inserts (44) are held in the seat (42) by a mutual attraction.

5. Filter as claimed in any one of the preceding claims, wherein the inserts (44) are two, the magnets (49) are plate-shaped with a radially outward facing face and a radially inward facing face, and wherein the radially outward facing face defines a positive pole of the magnets of one insert (44), and the radially inward facing face defines a positive pole of the magnets of another insert (44).

6. Filter as claimed in any one of the preceding claims, comprising a main magnet (17) internally coaxial to the tubular filter element (4).

7. Filter as claimed in claim 6, wherein the insert (44) with the positive poles of the magnets (49) facing inwardly is facing the negative pole of the main magnet (17), and the insert (44) with the negative poles of the magnets (49) facing inwardly is facing the positive pole of the main magnet (17).

## Patentansprüche

1. Filter zum Verarbeiten eines Fluids, umfassend:
- ein Gehäuse (2), das einen ersten und einen zweiten Körper (5, 6) umfasst, welche auf dichte Weise miteinander gekoppelt sind, mit einer Einlassöffnung (33) und einer Auslassöffnung (34) versehen sind und eine Filtrationskammer (3) begrenzen;
- ein rohrförmiges Filterelement (4), das in der Filtrationskammer (3) untergebracht ist und ein Innenvolumen (19), das mit einer der Öffnungen (33) verbindbar ist, sowie ein Außenvolumen (20), das mit einer anderen der Öffnungen (34) verbindbar ist, definiert; und
- mindestens ein rohrförmiges magnetisches Zubehörteil (37), das in dem Außenvolumen (20) koaxial zu dem Filterelement (4) untergebracht ist,
**dadurch gekennzeichnet, dass** das magnetische Zubehörteil (37) einen rohrförmigen Träger (38), der von dem Gehäuse (2) getrennt ist und von diesem lösbar getragen wird, und eine Vielzahl von magnetischen Einsätzen (44), die von dem rohrförmigen Träger (38) getragen werden, umfasst, wobei sich die Einsätze (44) in Umfangsrichtung um den rohrförmigen Träger (38) erstrecken und einen Körper (45), der aus einem Kunststoffmaterial hergestellt ist, eine Vielzahl von Magneten (49), die in jeweiligen Taschen (46) des Körpers (45) untergebracht sind, und eine Kappe (50) umfassen, die an dem Körper (45) angebracht ist, um die Magnete (49) in den Taschen (46) zu halten.

2. Filter nach Anspruch 1, wobei das magnetische Zubehörteil (37) einen Umfangsflansch (43) umfasst, der mit dem Gehäuse (2) koppelbar ist.

3. Filter nach Anspruch 1 oder 2, wobei die Einsätze (44) in einem Umfangssitz (42) des Trägers (38) untergebracht sind.

4. Filter nach Anspruch 3, wobei die Einsätze (44) durch eine gegenseitige Anziehung in dem Sitz (42) gehalten werden.

5. Filter nach einem der vorstehenden Ansprüche, wobei die Anzahl der Einsätze (44) zwei beträgt, die Magnete (49) plattenförmig mit einer radial nach außen weisenden Fläche und einer radial nach innen weisenden Fläche sind, wobei die radial nach außen weisende Fläche einen positiven Pol der Magnete eines Einsatzes (44) definiert und die radial nach innen weisende Fläche einen positiven Pol der Magnete eines anderen Einsatzes (44) definiert.

6. Filter nach einem der vorstehenden Ansprüche, umfassend einen zu dem rohrförmigen Filterelement (4) innen koaxial angeordneten Hauptmagneten (17).

7. Filter nach Anspruch 6, wobei der Einsatz (44) mit den nach innen weisenden positiven Polen der Magnete (49) dem negativen Pol des Hauptmagneten (17) zugewandt ist und der Einsatz (44) mit den nach innen weisenden negativen Polen der Magnete (49) dem positiven Pol des Hauptmagneten (17) zugewandt ist.

## Revendications

1. Filtre pour le traitement d'un fluide, comprenant :
- un logement (2) comprenant un premier et un deuxième corps (5, 6) couplés ensemble de manière étanche et équipé d'un orifice d'admission (33) et d'un orifice d'évacuation (34) et délimitant une chambre de filtration (3) ;
- un élément de filtre tubulaire (4) contenu dans la chambre de filtration (3) et définissant un volume interne (19) qui peut être relié à l'un des orifices (33) et un volume externe (20) qui peut être relié à un autre des orifices (34) ; et
- au moins un accessoire magnétique tubulaire (37) contenu dans le volume externe (20) de manière coaxiale par rapport à l'élément de filtre (4),
**caractérisé en ce que** l'accessoire magnétique (37) comprend un support tubulaire (38) distinct de et supporté de manière amovible par le logement (2) et une pluralité d'inserts magnétiques (44) portés par le support tubulaire (38), les inserts (44) s'étendant circonférentiellement autour du support tubulaire (38) et comprenant un corps (45) composé d'un matériau plastique, une pluralité d'aimants (49) contenus dans des poches respectives (46) du corps (45) et un embout (50) monté sur le corps (45) afin de retenir les aimants (49) dans les poches (46).

2. Filtre selon la revendication 1, dans lequel l'accessoire magnétique (37) comprend une bride périphérique (43) qui peut être couplée au logement (2).

3. Filtre selon la revendication 1 ou 2, dans lequel les inserts (44) sont contenus dans un siège circonférentiel (42) du support (38).

4. Filtre selon la revendication 3, dans lequel les inserts (44) sont maintenus dans le siège (42) par une attraction mutuelle.

5. Filtre selon l'une quelconque des revendications précédentes, dans lequel les inserts (44) sont au nombre de deux, les aimants (49) sont en forme de plaque avec une face tournée radialement vers l'extérieur et une face tournée radialement vers l'intérieur, et dans lequel la face tournée radialement vers l'extérieur définit un pôle positif des aimants d'un insert (44), et la face tournée radialement vers l'intérieur définit un pôle positif des aimants d'un autre insert (44).

6. Filtre selon l'une quelconque des revendications précédentes, comprenant un aimant principal (17) coaxial en interne par rapport à l'élément de filtre tubulaire (4).

7. Filtre selon la revendication 6, dans lequel l'insert (44) avec les pôles positifs des aimants (49) tournés vers l'intérieur fait face au pôle négatif de l'aimant principal (17), et l'insert (44) avec les pôles négatifs des aimants (49) tournés vers l'intérieur fait face au pôle positif de l'aimant principal (17).
